# EUROPEAN PATENT SPECIFICATION

(11) **EP 0 977 676 B1**
(45) Date of publication and mention of the grant of the patent: **21.11.2001**
(21) Application number: 98917152.5
(22) Date of filing: 22.04.1998
(51) Int. Cl.: B60P 1/64, B62D 13/06

(54) **TRANSPORT TRAILER FOR LIFTING AND MOVING**
TRANSPORTANHÄNGER ZUM AUFHEBEN UND BEWEGEN
REMORQUE DE LEVAGE ET DE DEPLACEMENT

(30) Priority: 23.04.1997 FI 971721
(43) Date of publication of application: 09.02.2000
(73) Proprietor: LIFTEC PRODUCTS OY, 33720 Tampere (FI)
(72) Inventor: MÄKINEN, Jorma, FIN-36200 Kangasala (FI)
(74) Representative: Kahilainen, Hannu Juhani
(86) International application number: FI9800354
(87) International publication number: WO9847736

(56) References cited:
- WO-A-82/00980
- FI-B- 74 913
- FI-B- 77 612
- FI-B- 80 414
- SE-B- 459 580
- US-A- 3 348 711

## Description

The invention relates to a transport trailer for lifting and moving, which is intended to be connected with a wheelwork to a mobile working machine for the purpose of handling containers, or the like, and which comprises:
- an intermediate frame of the transport trailer for lifting and moving, which includes
   - two vertical end frames, of which at least the first, i.e. the foremost end frame has substantially the shape of a downwards directed U-form, and is equipped with a wheelwork, and of which the second, i.e. the rearmost end frame is arranged to be connected with the working machine, and
   - a connecting frame, preferably telescopically adjustable in its length, connecting the end frames in their top part, wherein the transport trailer for lifting and moving further comprises:
- grippers for gripping one or more containers or the like, and
- means for transferring one or more containers in the vertical direction to the support of the transport trailer for lifting and moving, and vice versa.

A transport trailer for lifting and moving similar to the one presented above, is primarily known from the public Finnish patent application 802901. The solution according to this application is, however, unsatisfactory in several respects, especially for current container handling needs. It is known that container traffic has increased considerably in recent years. The increase in container traffic sets demands on intensifying container handling in the whole transport chain. One specific problem arisen in context with the increase in container traffic, is the optimization of the use of storage areas i.e. so-called container fields. The container fields have to hold more and more containers and at the same time it has to be possible to arrange the through passage of the containers flexibly via the container field. The solutions currently in use, for instance the solutions according to the aforementioned Finnish patent application FI-802901, cannot solve the occuring problems in a satisfactory manner, because their use in container transfer and storing requires a relatively large free space in the container field, which causes a decrease in the volume of optimal container storage and through passage.

The document US-A-3,348,711 is considered to represent the closest prior art.

The purpose of this invention is to eliminate the aforementioned problems to an extent as great as possible and thus to improve the state of art in the field. The basic purpose of the transport trailer for lifting and moving according to the invention is to expand the container handling capacity of the container field by constructing the transport trailer in such a way that the so-called free area of the container field, i.e. the area in which the transport trailer operates in container transfer, can be substantially minimized and thus the container field can be constructed in such a way therein a maximum number of containers can be stored per unit area.

For attaining these purposes, the transport trailer for lifting and moving according to the invention is primarily characterized in that
- the wheelwork is arranged turnable by a control means in a controlled manner with respect to the frame of the transport trailer for lifting and moving, and that
- the grippers are placed in connection with both the foremost and the rearmost end frame.

One advantage achieved with the turnability of the wheelwork is, for instance, that it is possible to drive the transport trailer for lifting and moving on top of the container, in other words inside the frame of the U-form of the foremost end frame, so that viewed from the top, at this driving on stage as well as at the container removing stage, the longitudinal direction of the frame of the transport trailer forms an angle freely selectable with respect to the longitudinal direction of the working machine within the range of turnability of the wheelwork of the transport trailer for lifting and moving. With the placement of the grippers, it is possible to optimize the bearing capacity of the transport trailer at the same time when the overall length of the transport trailer in an operating situation can be minimized, which is ideal for reducing the need for surface area to be kept free in the container field.

According to an advantageous embodiment, in connection with the frame of the transport trailer for lifting and moving, preferably in connection with the foremost end frame, at least one detector means is provided between the foremost end frame of the transport trailer for measuring the horizontal distance between the longitudinally directed outer sides of the container or the like in its longitudinal direction and the foremost end frame, and the transport trailer is provided with a control and computing unit arranged to control the actuators of the control means to turn the wheelwork.

An advantage achieved with the above presented solution is that the driving on the container can be conducted in a substantially automated manner after the driver of the transport trailer has placed the foremost end frame in a suitable position for driving on the container. On the other hand, by using automated turning of the wheelwork implemented by the detector means, it is possible to optimize the width of the foremost end frame of the transport trailer, which is ideal for expanding the operational capacity of the container field, because it is possible to minimize the distance between the longitudinal sides of adjacently stored containers.

According to an advantageous embodiment of the invention, the wheelwork located in connection with the foremost end frame, is a bogie pair composed of at least four wheels (two pairs of wheels). The advantage achieved with this solution is that the diameter measurement of the wheels in the wheelwork can be minimized, because the load directed to the wheelwork by the transport trailer and the container supported therewith can be divided among several wheels. This, in turn, makes it possible to optimize the uplift of the container in the vertical direction to be as short as possible, in such a way, however, that the wheels of the bogie are capable of turning freely underneath the container when the container is in an uplifted position, wherein very short turning radi are achieved with the transport trailer, however, with a moderate container lifting height. By using a bogie construction, also the drivability of the transport trailer is improved, because the dynamic loading resting on the wheels is reduced, wherein it is possible to use higher transfer speeds.

Further, according to an advantageous embodiment, the bogie structures of the bogie pair are supported to the bottom parts of the vertical beams in the foremost end frame with a diagonal rail structure so that the foremost wheels of the bogie pair are, in the longitudinal direction of the transport trailer behind the front surface of the foremost end frame, or at the highest, at the level of the same. With this solution for its part, it is possible to optimize space utilization in the container field, because there are no wheels in the transport trailer which reach in the longitudinal direction of the container beyond the crosswisely directed vertical plane defined by the front end of the container which is being handled, but all the wheels are, at the highest, at the level of the front end.

Furthermore, it is advantageous that the grippers are arranged to move vertically with respect to the frame of the transport trailer, wherein the connecting frame of the transport trailer is at a constant height during the operation of the transport trailer. In addition, the grippers are situated at the location of the U shape of the end frames. Firstly, with this solution it is possible to rate the elevating force required by the grippers to correspond to the weight of the container, because it is not necessary to transfer the frame of the transport trailer in the vertical direction, and secondly, transfers in the vertical direction can be implemented without substantial moment loads directed to the connecting frame or the end frame.

It is advantageous that in the operating situation of the transport trailer for lifting and moving, the foremost end frame of the transport trailer is placed at the location of the longitudinal outer sides (and roof) of the container in the front end of the container, wherein it is placed, at the highest, at the level of the front end of the container, or behind it in the longitudinal direction of the container. Thus, the front end of the container is free, and the foremost end frame with the grippers and the wheelwork are situated behind the front end of the container, viewed in the crosswise direction of the transport trailer for lifting and moving, wherein the container can be directly located for example against a wall or against the end of another container.

In an advantageous embodiment of the invention, preferably the foremost end frame is connected to the connecting frame with an articulation, to rotate around an axis vertically directed with respect to the connecting frame. With this solution, the operational properties of the transport trailer for lifting and moving are improved both in driving on the container and in other movements requiring a short turning radius.

The other appended dependent claims present some further advantageous embodiments of the transport trailer for lifting and moving according to the invention.

In the following description, the invention will be illustrated in more detail with reference to the appended figures. In the figures,
- Fig. 1: shows, in a side view, an application of the transport trailer for lifting and moving according to the invention,
- Fig. 2: shows an application according to Fig. 1 viewed from the top,
- Fig. 3: shows, on a larger scale, a transport trailer for lifting and moving according to Figs. 1 and 2, viewed from the direction of the foremost vertical frame of the front end,
- Fig. 4: is a diagram showing a wheelwork control system of the transport trailer for lifting and moving according to the invention,
- Fig. 5: is a diagram, viewed from the top, showing the stage of driving the transport trailer on/off the container, and
- Fig. 6: shows, in a diagram, the operational turning radius which can be achieved with the transport trailer, viewed from the top.

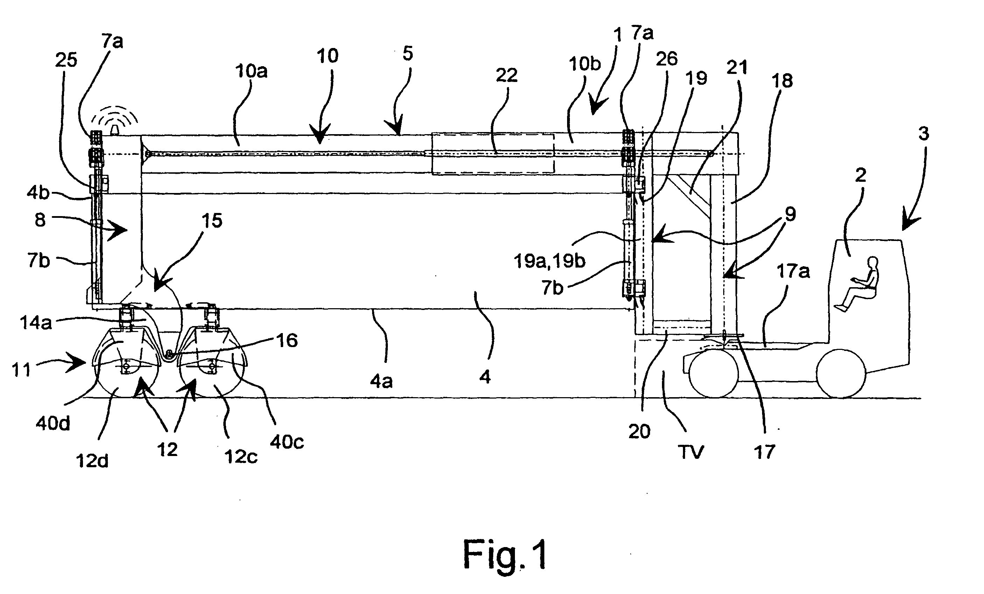

With particular reference to Figs. 1 to 3, a transport trailer for lifting and moving 1 according to the invention is intended to be coupled to a working machine 3, equipped with a driver's cabin 2, for handling containers 4 or the like. The working machine can be, for example, a quay carrier or a forklift truck.

The transport trailer for lifting and moving comprises as its main parts a frame 5 of the transport trailer, grippers 6 for gripping one or more containers at the location of the standardized gripping sections of the containers, and devices for transferring one or more containers 4, or the like, supported by the grippers 6, in vertical direction from the supporting base upwards, to the support of the transport trailer 1, or vice versa.

The frame 5 of the transport trailer 1 comprises two vertically directed end frames 8, 9 and a connecting frame 10, the length of which is telescopically adjustable and which connects the end frames 8, 9 in their top part. The first, i.e. the foremost end frame has the shape of a substantially downwards directed U-form, located in the same vertical plane in the direction perpendicular to the transport trailer for lifting and moving, and it is equipped with a wheelwork 11. In the embodiment presented in the figures, the wheelwork 11 is a bogie pair 13, 14 consisting of at least four wheels 12. The wheels in both bogie structures in the bogie pairs 13, 14, are supported to be located one after the other in the direction of motion, in the same longitudinally directed vertical plane of the transport trailer for lifting and moving. As illustrated especially in Fig. 1, in an operating situation of the transport trailer, by means of support structures of the foremost end frame 8 located at the highest at the level of the front end 4b of the container, the bogies 13 and 14 of the bogie pair are supported to the bottom parts of the vertical beams 8a, 8b belonging to the U-form, especially by means of longitudinally directed diagonal rail structures 15 of the transport trailer, which are directed towards the working machine, in such a way that the foremost wheels 12b, 12d of the bogie pair 13,14, are behind the front edge of the transport trailer 1 or at its level, at the highest. The articulation point 16 of the bogie structure is located substantially at the level of the bearing point of the wheels 12, between the wheels 12. The joint at the articulation point 16 is a horizontal joint between the support structure 15 in connection with the vertical beams 8a, 8b of the end frame 8, and the bogie frames 13a, 14a.

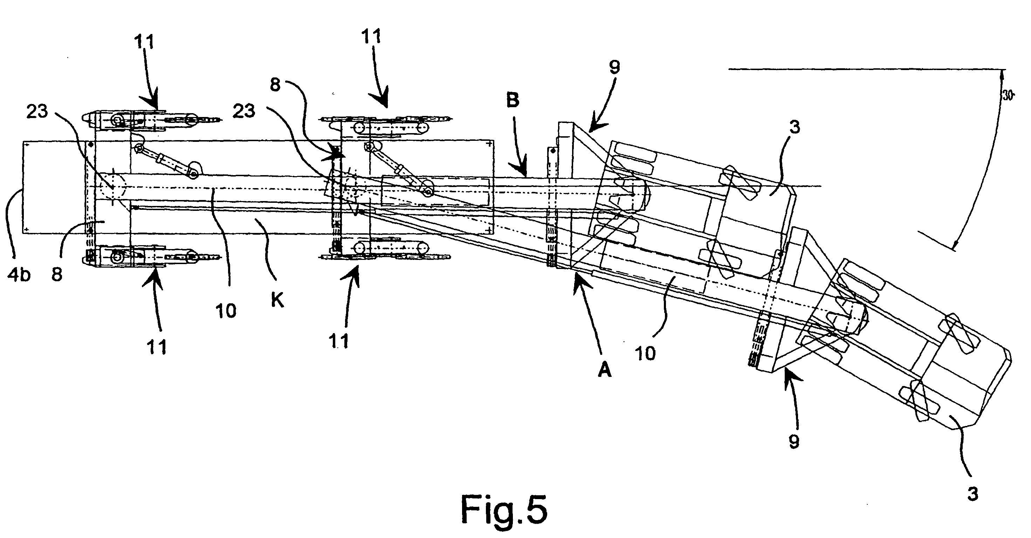

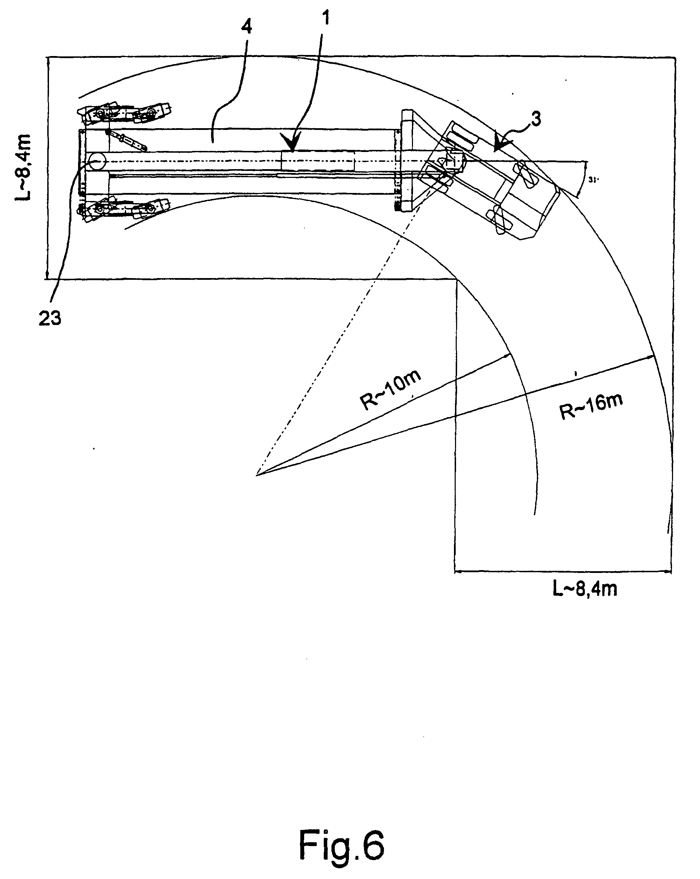

The second, i.e. the rearmost end frame 9 is connected to the working machine 3 in such a way that the supporting point 17, supported by which the transport trailer 1 and the working machine 3 are capable of swinging with respect to each other typically in a horizontal plane around a vertical axis, is located in connection with a vertically directed rear beam 18, placed centrally in view of the longitudinal direction of the frame 5 of the transport trailer 1, wherein the front beams 19 of the rearmost end frame 9 are connected with longitudinal 20 and diagonal rail structures 21 to the rear beam 18 at a horizontal distance from the rear beam 18. The above presented structures (i.e. 19 and 20) are located, in the operating position of the transport trailer, above the level of the upper surface 17a of the end of the working machine 3 directed towards the transport trailer 1, i.e. above the supporting point 17. Thus, a sufficient space allocation (TV) is provided between the supporting point 17 and the front beams 19, both in the horizontal and the vertical direction, in order to perform angle movements between the working machine 3 and the transport trailer 1 (see Figs. 5 and 6). The rear beam 18 is located in a vertical position directly on top of the supporting point 17 used as a swivel.

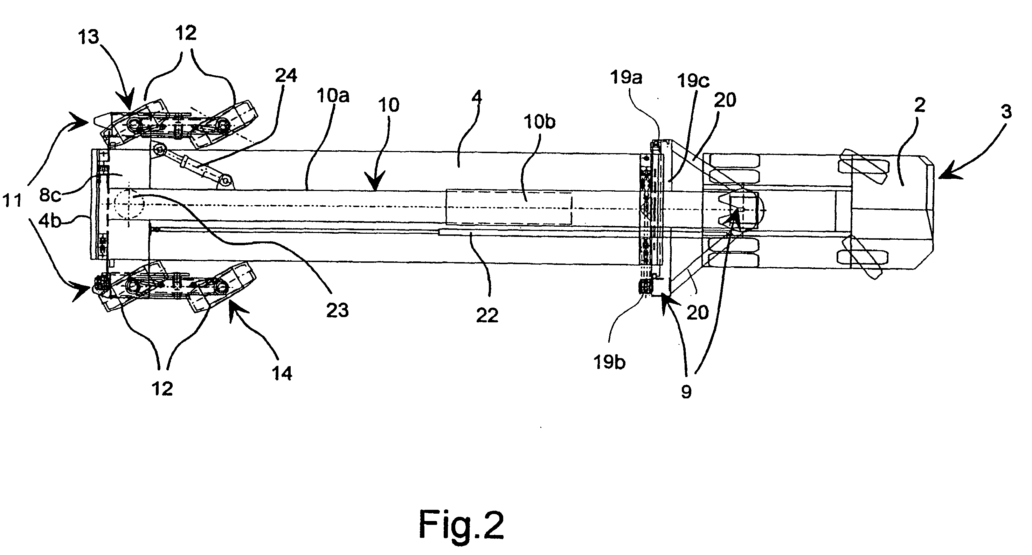

The connecting frame 10 connecting the end frames 8 and 9 in their top part, is connected centrally with a ridge beam 8c which is located in the upper section of the downwards turned U-form of the foremost end frame and which connects the vertical beams 8a and 8b. As is shown especially in Fig. 2, the front edges of both the ridge beam 8c and the means connected therewith are located, at the highest, at the level of the front end 4b of the container 4, or behind the same. Correspondingly, the connecting frame 10 is coupled to the rearmost end frame 9 both at the top part of the rear beam 18 and respectively a the middle part of the ridge beam 19c of the front beams 19, which preferably form a downwards turned U-form corresponding to the foremost end frame 8. The connecting frame 10 is preferably constructed of two elongated, tubular beams, the shape of the cross-profile of the first beam 10a fitting inside the second beam 10b, wherein a telescopically operating structure is achieved, the length of which is adjusted with an actuator, such as a cylinder-piston combination 22, placed between the foremost 8 and the rearmost end frame 9. The foremost end frame 8 is coupled, by means of articulation, with the connecting frame 10, to the free end of its first, i.e. foremost part 10a to swing, with respect to the connecting frame 10, by means of a joint 23 around the vertical axis. Between the first part 10a of the connecting frame 10 and a ridge beam 8c of the foremost end frame 8, an actuator, adjustable in its length, is provided, such as a pressurized fluid operated cylinder-piston combination 24, whereby said rotations of the foremost end frame 8 with respect to the longitudinal direction of the connecting frame 10 can be implemented. Such rotations are needed especially in a situation of driving on the container, and in situations of turning the transport trailer 1 while moving it in the container field.

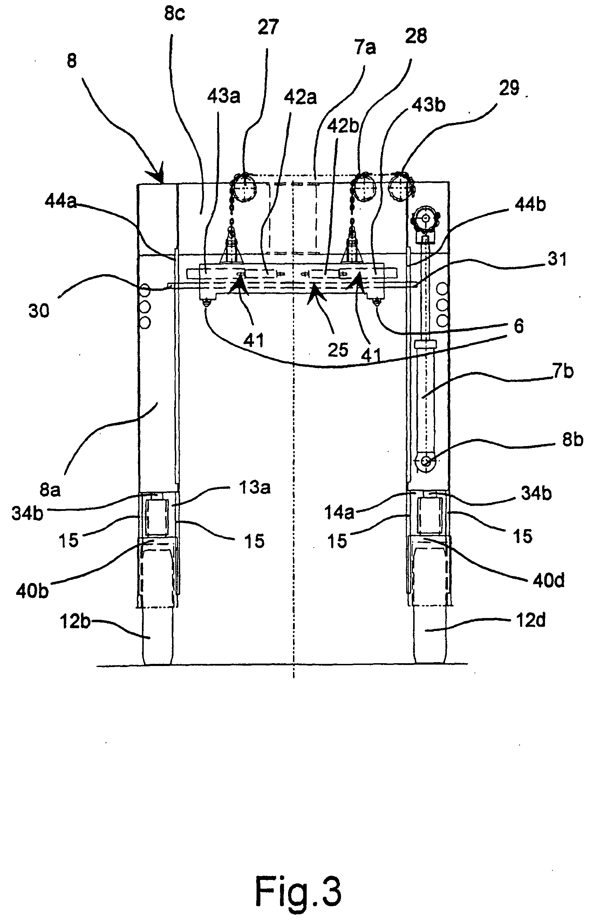

Especially with reference to Fig. 3, the grippers 6, which are located in connection with the U-forms of both the foremost 8 and the rearmost 9 end frame (in connection with the vertical beams 19), are arranged to move in the vertical direction with respect to the frame 5 of the transport trailer for lifting and moving 1. Thus, the connecting frame 10 of the frame 5 of the transport trailer 1 is at a constant height during the operation of the transport trailer 1, wherein its height from the ground level is defined in such a way that at least one container can be located on the support of the transport trailer 1 in such a way that the lower edge 4a of the container is at least above the bearing points i.e. pivots of the wheels 12 of the bogie pair 13, 14 or exceeds in its height position the diameter of the wheels of the wheelwork 11, wherein a considerable impediment to a free turn of the wheels will not occur during the use of the transport trailer.

The grippers 6 are located in connection with the U-forms of the end frames, in connection with transverse beams 25, 26 placed against them and between the vertical beams 8a, 8b in the vertical main plane of the U-form, symmetrically against the longitudinal direction of the transport trailer for lifting and moving, viewed in vertical cross-profile (Fig. 3). The transverse beams 25, 26 are provided with two means acting as the first actuator 7a and transmitting tension, for example wires or chains, which are connected via idler wheels 27, 28, 29 located in the ridge beams 8c and 19c, to the vertically operating second actuator 7b, variable in its length, such as a pressurized fluid operated cylinder-piston combination, which is attached to the vertical beams 8b and 19b in their longitudinal direction. With the alteration of the length of the second actuator 7b, the vertical movements of the horizontally directed transverse beams 25, 26 are achieved, and thus also the movements of the grippers 6. In the transverse beams 25, 26, there are control parts 31, 32 acting as horizontal and longitudinal extensions to them, and located in vertical guide beams situated in the lateral surfaces of the vertical beams 8a, 8b and 19a, 19b of the end frames, wherein the vertically directed transverse beams 25, 26 maintain their direction during vertically directed movements. The adjustability of the connecting frame 10 in the longitudinal direction makes it possible to impose the grippers 6 always suitably with respect to the attachment points of the container 4.

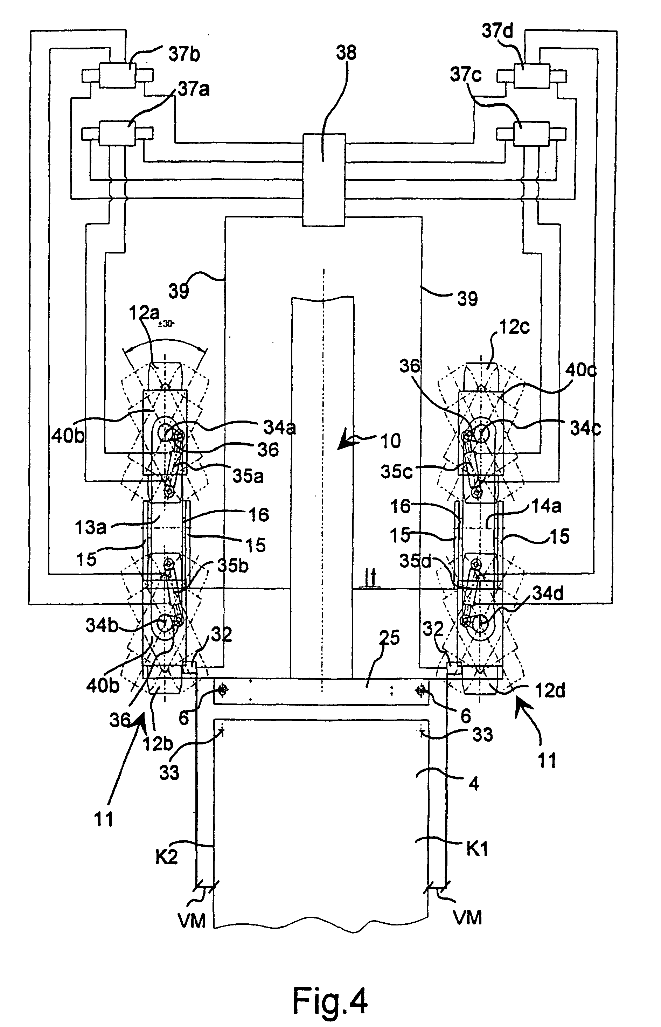

Especially with reference to Fig. 4, in connection with the frame 5 of the transport trailer 1, preferably in connection with the foremost end frame, for example in the interior surfaces of the vertical beams 8a, 8b, at least one of them, there is at least one detector device 32 for the purpose of measuring the horizontal distance VM between the longitudinally directed and vertical exterior sides of the container 4, or the like, located between the foremost end frame 8 of the transport trailer, and vertical beams and the bogie of the foremost end frame 8. Fig. 3 presents in a diagram only the transverse beam 25 with its grippers 6. Correspondingly, the attachment points of the container 4 are indicated with the reference number 33. In the embodiment of Fig. 4, a vertical axis 34a―34d is located between the bogie frames 13a, 14a of the bogie pair 13, 14 and the support frame 40a―40d of each wheel 12, and it is mounted to swing around the vertically directed turning point with an actuator effective between each vertical axis 34a―34d and the corresponding bogie frame 13a, 14a, especially with a pressurized fluid operated cylinder-piston combination 35a―35d. The first end of the actuator is connected to the diagonal rail structure, and correspondingly, the second end is articulated to a bracket 36 in connection with the upper end of each vertical axis 34a―34d, wherein the actuators can be adjusted in their length with pressurized fluid operation by means of, for example, an electrically controlled control valve 37a―37d arranged for each actuator. The valves are controlled, for example electrically, from a control and computing unit 38 which is located in connection with the transport trailer, and to which a measuring signal proportional to the horizontal distance VM indicated in the detector device/devices 32 is passed along a line/lines 39. The control and computing unit 38 is provided with a control logic, which operates the valves 37, for example electrically, in such a way that the wheelwork 11 turns in the same direction. As can be seen from Fig. 3, in the situation of driving on the container, the turning angle can be ± 30°.

Especially in Fig. 5, it is possible to see the stages of driving on/off the container, wherein steering of the wheelwork 11 is implemented at least with the detector devices 32 and with the control logic. On the other hand, it is also possible to operate the joint 23 with the actuator 24. Thus, an angle of approximately 30° is created between the longitudinal direction of the working machine 3 and the longitudinal directions of the longitudinal outer sides K1 and K2 of the container 4. Correspondingly, Fig. 6 presents as examples some turning radii achieved in situation of transferring the container. A turn of 90° in the driving direction of the working machine 3 and the transport trailer 1 as well as of the container supported by the transport trailer, requires in the presented example application approximately a 8.4 m wide free space. Thus, the wheelwork 11 is steered from the driver's cabin of the working machine 3 typically by skipping the driving on/off the container application implemented with the detector devices 32 and control logic.

Especially with reference to Fig. 3, there is a locking arrangement 41 in connection with the horizontal beams 25 and 26, which is used especially in driving situations. When the container 4 is lifted up to its upper position on the support of the transport trailer 1, locking pins 43a, 43b are moved with pressurized fluid operated actuators 42a, 42b in the longitudinal direction of the horizontal beams 25 and 26 out from their ends, wherein they set in corresponding holes 44a, 44b in the vertical beams 8a, 8b and 19a, 19b, wherein the container 4 is supported by the frame 5.

Advantageously, the actuators described above are hydraulically operated cylinder-piston combinations controlled by valves which are controlled from the driver's cabin 2 of the working machine 3.

In the foregoing, the application of the transport trailer for lifting and moving according to the invention is presented particularly in container manipulation. However, it is obvious that the transport trailer for lifting and moving can be implemented according to the basic idea of the invention also in other transportation applications requiring lifting and transferring, wherein corresponding requirements are needed, in other words a bogie, which has a wheelwork turning in a controlled manner and operated advantageously with detector devices, wherein the front frame is designed in such a way that the vertically directed movements of the container or the like and the support of the container is optimized according to the strength of materials and wherein the front side of the front end of the container, or the like, is free.

## Claims

1. A transport trailer for lifting and moving, which is intended to be coupled to a working machine (3) moving by means of a wheelwork, for handling containers (4) or the like, and which comprises:
- a frame (5) of the transport trailer for lifting and moving, which includes:
- two vertically directed end frames (8, 9), of which at least the first, i.e. the foremost end frame (8) has substantially the shape of a downwards directed U-form, and is equipped with a wheelwork (11), and the second of which i.e. the rearmost end frame (9) is arranged to be connected with the working machine (3), and
- a connecting frame (10), preferably telescopically adjustable in its length, connecting the end frames (8, 9) in their top part, wherein the transport trailer for lifting and moving further comprises:
- grippers (6) for gripping one or more containers (4) or the like, which grippers (6) are arranged movable in the vertical direction in relation to the frame (5) of the transport trailer for lifting and moving (1), and are placed in connection with both the foremost and the rearmost end frame (8, 9)
- means (7a, 7b) for transferring one or more containers (4) or the like in vertical direction upward on the support of the transport trailer for lifting and moving (1), or vice versa, wherein
- the wheelwork (11) is arranged turnable by control means (34a―d, 35a―d, 37a―d) in a controlled manner with respect to the frame of the transport trailer for lifting and moving (1),
**characterized in that**
- the front frame (8) is arranged to be located, in the operating situation of the transport trailer for lifting and moving, by the longitudinally directed outer sides (K1, K2) in the front end (4a) of the container (4) and arranged to be placed at the highest at the level of the front end in the longitudinal direction of the container (4), that
- the bogies (13 and 14) of the bogie pair (13, 14) are supported with an articulation (16) to the bottom parts of the vertical beams (8a, 8b) of the foremost end frame, especially with diagonal rail structures (15) in such a way that the foremost wheel (12a, 12d) of the bogie pair (13, 14) is behind the front edge of the transport trailer (1), or at the highest at the level of the same, and thus in the operating situation of the transport trailer for lifting and moving at its highest at the level of the front end (4a) of the container (4) in the longitudinal direction of the container (4), and that
- the grippers (6) are placed at.the location of the U-forms of the end frames (8, 9) preferably in connection with the transverse beams (25, 26) located in connection with the end frames (8,9).

2. A transport trailer for lifting and moving according to claim 1,
**characterized in that** in connection with the frame (5) of the transport trailer for lifting and moving (1), preferably in connection with the foremost end frame (8), at least one detector device (32) is provided for measuring the horizontal distance (VM) between the longitudinally directed outer sides (K1, K2) of the container (4), or the like, located between the foremost end frame (8) of the transport trailer (1) and the foremost end frame (8), and that in connection with the transport trailer for lifting and moving (1) there is a control and computing unit (38), which is arranged to control the actuators (35a―d) of the control means (34a―d, 35a―d, 37a―d) in order to turn the wheelwork (11).

3. A transport trailer for lifting and moving according to claim 1,
**characterized in that** the wheelwork is a bogie pair (13, 14) consisting of at least four wheels (12a―d).

4. A transport trailer for lifting and moving according to claim 1 or 3,
**characterized in that** the bogie structures (13 and 14) of the bogie pair (13, 14) are supported to the lower sections of vertical beams (8a, 8b) of the foremost end frame (8) with diagonal rail structures (15) in such a way that the foremost wheel (12b, 12d) of the bogie pair (13, 14) is behind the front edge of the transport trailer for lifting and moving (1), or at its highest at the level of the same.

5. A transport trailer for lifting and moving according to claim 1,
**characterized in that** the grippers (6) are arranged to move in the vertical direction with respect to the frame (5) of the transport trailer(1), and that the connecting frame (10) of the frame (5) of the transport trailer (1) is at a constant height during the operation of the transport trailer (1).

6. A transport trailer for lifting and moving according to claim 1 or 5,
**characterized in that** the grippers (6) are placed in connection with the transverse beams (25, 26) located in connection with the U-forms of the end frames (8, 9), and that there are means (7a, 7b) located in connection with the end frames for transferring the transverse beams and thereby grippers (6), in vertical direction.

7. A transport trailer for lifting and moving according to claim 1,
**characterized in that** preferably the foremost end frame (8) is coupled with articulation (23) to the connecting frame (10) to swing around a vertical axis with respect to the connecting frame (10) by means of an actuator (24) effective between the connecting frame (10) and the foremost end frame (8).

8. A transport trailer for lifting and moving according to claim 1,
**characterized in that** the rearmost end frame (9) is devised to comprise a vertical rear beam (18) acting as a connecting part of the working machine (3) and foremost beams (19) of the rearmost end frame located at a distance from the rear beam, having primarily the shape of a downwards directed U, and the grippers (6) being connected thereto, wherein connecting beams (20, 21) connecting the parts (18, 19) are provided between them, and that the rearmost end frame (9) is arranged in such a way that in the operating position of the transport trailer for lifting and moving (1) it is located above the supporting point (17) between the bottom part of the rear beam (18) of the transport trailer for lifting and moving (1) and the working machine (3).

9. A transport trailer for lifting and moving according to claim 1,
**characterized in that** the transverse beams (25, 26) of the grippers (6) are arranged to receive a vertically directed motion control from the vertical beams (8a, 8b; 19a, 19b) of the end frames (8, 9).

10. A transport trailer for lifting and moving according to claim 1,
**characterized in that** in connection with the transverse beams (25, 26) of the grippers (6), a locking arrangement (41) is established by means of which it is possible lock the transverse beams (25, 26) immobile in vertical direction in connection with the end frames (8, 9).

11. A transport trailer for lifting and moving according to claim 1,
**characterized in that** the height position of the connecting frame (10) is selected in such a way that at least one container (4) can be lifted up to the height position, in which the level of its lower edge (4a) is substantially at least at the level of the bearing points of the wheels (12a―d) of the wheelwork (11).

## Patentansprüche

1. Transportanhänger zum Anheben und Bewegen, der vorgesehen ist, um an eine Arbeitsmaschine (3), beweglich durch ein Räderwerk, gekoppelt zu werden, zur Handhabung von Containern (4) oder dergleichen, und der aufweist:
- einen Rahmen (5) des Transportanhängers zum Anheben und Bewegen, der umfaßt:
- zwei vertikal ausgerichtete Endrahmen (8, 9), von denen zumindest der erste, das heißt der vorderste Endrahmen (8) im wesentlichen die Gestalt einer nach unten gerichteten U-Form aufweist und mit einem Räderwerk (11) ausgestattet und dessen zweiter, das heißt der hinterste Endrahmen (9) eingerichtet ist, um mit der Arbeitsmaschine (3) verbunden zu werden, und
- einen Verbindungsrahmen (10), vorzugsweise in seiner Länge teleskopierbar einstellbar, der die Endrahmen (8, 9) in deren oberen Bereich verbindet, wobei der Transportanhänger zum Anheben und Bewegen darüber hinaus aufweist:
- Greifer (6) zum Greifen eines oder mehrerer Container (4) oder dergleichen, die Greifer (6) sind in vertikaler Richtung bezogen auf den Transportanhänger (1) zum Anheben und Bewegen beweglich ausgebildet und sind in Verbindung mit sowohl dem vordersten als auch dem hintersten Endrahmen (8, 9) angeordnet,
- Mittel (7a, 7b) zum Befördern eines oder mehrerer Container (4) oder dergleichen in vertikaler Richtung aufwärts auf das Gestell des Transportanhängers zum Anheben und Bewegen (1) oder umgekehrt, wobei
- das Räderwerk (11) in gesteuerter Art und Weise über Steuerungsmittel (34a - d, 35a - d, 37a - d) bezogen auf den Rahmen des Transportanhängers zum Anheben und Bewegen (1) drehbar ausgebildet ist, **dadurch gekennzeichnet, dass**
- der Vorderrahmen (8) ausgebildet ist, während des Betriebes des Transportanhängers zum Anheben und Bewegen durch die längsgerichteten äußeren Seiten (K1, K2) an dem vorderen Ende (4a) des Containers (4) angeordnet zu sein und ausgebildet ist, um an der höchsten Ebene des vorderen Endes in Längsrichtung des Containers (4) angeordnet zu sein,
- dass die Drehgestelle (13 und 14) des Drehgestellpaares (13, 14) an einem Gelenk (16) an den unteren Bereichen des vertikalen Trägers (8a, 8b) des vordersten Endrahmens dergestalt abgestützt sind, insbesondere mit diagonalen Schienenstrukturen (15), dass das vorderste Rad (12a, 12d) des Drehgestellpaares (13, 14) sich hinter der Vorderkante des Transportanhängers (1) oder auf der höchsten Ebene desselben und somit während des Betriebes des Transportanhängers zum Anheben und Bewegen auf der höchsten Ebene des Vorderendes (4a) des Containers (4) in der Längsrichtung des Containers (4) befindet, und dass
- die Greifer (6) an den U-Formen der Endrahmen (8, 9) angeordnet sind, vorzugsweise in Verbindung mit den Querträgem (25, 26), die in Verbindung mit den Endrahmen (8, 9) angeordnet sind.

2. Transportanhänger zum Anheben und Bewegen nach Anspruch 1, **dadurch gekennzeichnet, dass** in Verbindung mit dem Rahmen (5) des Transportanhängers zum Anheben und Bewegen (1), vorzugsweise in Verbindung mit dem vordersten Endrahmen (8), zumindest eine Detektoreinrichtung (32) zum Messen der horizontalen Distanz (VM) zwischen den längsgerichteten äußeren Seiten (K1, K2) des Containers (4) oder dergleichen, angeordnet zwischen dem vordersten Endrahmen (8) des Transportanhängers (1) und dem vordersten Endrahmen (8), vorgesehen ist, und dass in Verbindung mit dem Transportanhänger zum Anheben und Bewegen (1) eine Steuerungs- und Recheneinheit (38) vorhanden ist, die ausgebildet ist, die Aktuatoren (35a - d) der Steuerungsmittel (34a - d, 35a - d, 37a - d) zu steuern, um das Räderwerk (11) zu drehen.

3. Ein Transportanhänger zum Anhängen und Bewegen nach Anspruch 1,
**dadurch gekennzeichnet, dass** das Räderwerk ein Drehgestellpaar (13, 14) ist, bestehend aus zumindest vier Rädern (4a bis d).

4. Transportanhänger zum Anheben und Bewegen nach Anspruch 1 oder 3,
**dadurch gekennzeichnet, dass** die Drehgestellkonstruktion (13 und 14) des Drehgestellpaares (13, 14) der Gestalt an den unteren Abschnitten der vertikalen Träger (8a, 8b) des vordersten Endrahmens (8) mit diagonalen Schienenstrukturen (15) abgestützt sind, dass das vorderste Rad (12b, 12d) des Drehgestellpaares (13, 14) sich hinter der Vorderkante des Transportanhängers zum Anheben und Bewegen (1) oder an der höchsten Ebene desselben befindet.

5. Transportanhänger zum Anheben und Bewegen nach Anspruch 1, **dadurch gekennzeichnet, dass** die Greifer (6) in vertikaler Richtung bezogen auf den Rahmen (5) des Transportanhängers (1) beweglich ausgebildet sind und dass der Verbindungsrahmen (10) des Rahmens (5) des Transportanhängers (1) sich während des Betriebes des Transportanhängers (1) in einer konstanten Höhe befindet.

6. Transportanhänger zum Anheben und Bewegen gemäß Anspruch 1 oder 5,
**dadurch gekennzeichnet, dass** die Greifer (6) in Verbindung mit den Querträgern (25, 26) angeordnet sind, angeordnet in Verbindung mit der U-Form der Endrahmen (8, 9) und dass Mittel (7a, 7b) vorhanden sind, angeordnet in Verbindung mit den Endrahmen zum Verlagern der Querträger und dadurch der Greifer (6) in vertikaler Richtung.

7. Transportanhänger zum Anheben und Bewegen nach Anspruch 1, **dadurch gekennzeichnet, dass** vorzugsweise der vorderste Endrahmen (8) mit einem Gelenk (23) an den Verbindungsrahmen (10) gekoppelt ist, um um eine vertikale Achse bezogen auf den Verbindungsrahmen (10) mittels eines Aktuators (24) zu verschwenken, der zwischen dem Verbindungsrahmen (10) und dem vordersten Endrahmen (8) wirksam ist.

8. Transportanhänger zum Anheben und Bewegen nach Anspruch 1, **dadurch gekennzeichnet, dass** der hinterste Endrahmen (9) konstruiert ist, einen vertikalen hinteren Träger (18) aufzuweisen, der als ein Verbindungsteil der Arbeitsmaschine (3) und vorderster Träger (19) des hintersten Endrahmens zu wirkt, der in einer Entfernung von dem hinteren Träger angeordnet ist, hauptsächlich in Gestalt eines nach unten gerichteten U's und die Greifer (6) sind daran befestigt, wobei die Teile (18, 19) verbindenden Verbindungsträger (20, 21) zwischen diesen vorgesehen sind, und dass der hinterste Endrahmen (9) dergestalt angeordnet ist, dass er in der Betriebsposition des Transportanhängers zum Anheben und Bewegen (1) oberhalb des Abstützpunktes (17) zwischen dem Bodenbereich des hinteren Trägers (18) des Transportanhängers zum Anheben und Bewegen (1) und der Arbeitsmaschine (3) angeordnet ist.

9. Transportanhänger zum Anheben und Bewegen nach Anspruch 1, **dadurch gekennzeichnet, dass** die Querträger (25, 26) der Greifer (6) ausgebildet sind, um eine vertikal gerichtete Bewegungssteuerung von den vertikalen Trägem (8a, 8b; 19a, 19b) der Endrahmen (8, 9) aufzunehmen.

10. Transportanhänger zum Anheben und Bewegen nach Anspruch 1, **dadurch gekennzeichnet, dass** in Verbindung mit den Querträgem (25, 26) der Greifer (6) eine Verriegelungsanordnung (41) ausgebildet ist, auf Grund der es möglich ist, die Querträger (25, 26) in vertikaler Richtung unbeweglich in Verbindung mit den Endrahmen (8, 9) zu verriegeln.

11. Transportanhänger zum Anheben und Bewegen nach Anspruch 1, **dadurch gekennzeichnet, dass** die Höhenposition des Verbindungsrahmens (10) dergestalt ausgewählt ist, dass zumindest ein Container (4) auf die Höhenposition angehoben werden kann, in der die Ebene seiner Unterkante (4a) sich im wesentlichen zumindest auf der Ebene der Lagerungspunkte der Räder (12a bis d) des Räderwerkes (11) befindet.

## Revendications

1. Remorque de transport pour le levage et le déplacement, destinée à être accouplée à une machine motrice (3) qui se déplace au moyen d'un train de roues, pour la manutention de containers (4) ou similaires, et qui comprend :
- un châssis (5) de la remorque de transport pour le levage et le déplacement, qui inclut :
-- deux cadres terminaux (8, 9) dirigés verticalement, dont le premier au moins, c'est-à-dire le cadre terminal avant (8) a sensiblement la forme d'un U tourné vers le bas, et est équipé d'un train de roues (11), et dont le deuxième, c'est-à-dire le cadre terminal arrière (9) est agencé de manière à être connecté avec la machine motrice (3), et
-- un cadre de connexion (10), de préférable ajustable par voie télescopique quant à sa longueur, qui connecte les cadres terminaux (8, 9) dans leur partie supérieure, et ladite remorque de transport pour le levage et le déplacement comprend en outre :
- des éléments de saisie (6) pour saisir un ou plusieurs containers (4) ou similaires, lesdits éléments de saisie (6) étant agencés de façon mobile dans la direction verticale par rapport au châssis (5) de la remorque de transport (1), et sont placés en relation avec le cadre terminal avant et le cadre terminal arrière (8, 9),
- des moyens (7a, 7b) pour transférer un ou plusieurs containers (4) ou similaires en direction verticale vers le haut sur le support de la remorque de transport (1), ou vice versa, et dans laquelle :
- le train de roues (11) est agencé avec faculté de tourner par des moyens de commande (34a-d, 35a-d, 37a-d) d'une manière contrôlée par rapport au châssis de la remorque de transport (1),
**caractérisée en ce que**
- le cadre avant (8) est agencé de manière à être localisé, dans la condition de fonctionnement de la remorque de transport, par les côtés extérieurs longitudinaux (K1, K2) dans l'extrémité avant (4a) du container (4), et agencé afin d'être placé au plus haut au niveau de l'extrémité avant dans la direction longitudinale du container (4),
- les bogies (13 et 14) de la paire de bogies (13, 14) sont supportés avec une articulation (16) sur les parties inférieures des poutres verticales (8a, 8b) du cadre terminal avant, spécialement avec des structures de rails en diagonale (15), de telle façon que la roue la plus en avant (12a, 12d) de la paire de bogies (13, 14) est derrière le bord frontal de la remorque de transport (1), ou au plus haut au niveau de celui-ci, et ainsi dans la condition de fonctionnement de la remorque de transport au plus haut au niveau de l'extrémité frontale (4a) du container (4) dans la direction longitudinale du container (4), et
- les éléments de saisie (6) sont placés à l'emplacement des formes en U des cadres terminaux (8, 9), de préférence en connexion avec les poutres transversales (25, 26) localisées en connexion avec les cadres terminaux (8, 9).

2. Remorque de transport pour le levage et le déplacement, selon la revendication 1, **caractérisée en ce que**, en connexion avec le châssis (5) de la remorque de transport (1) et de préférence en connexion avec le cadre terminal avant (8), il est prévu au moins un dispositif détecteur (32) pour mesurer la distance horizontale (VM) entre les côtés extérieurs longitudinaux (K1, K2) du container (4), ou similaire, situé entre le cadre terminal avant (8) de la remorque de transport (1) et le cadre terminal avant (8), et **en ce qu'**il est prévu en connexion avec la remorque de transport (1) une unité de commande et de calcul (38), laquelle est agencée afin de commander les actionneurs (35a-d) des moyens de commande (34a-d, 35a-d, 37a-d) afin de faire tourner le train de roues (11).

3. Remorque de transport pour le levage et le déplacement, selon la revendication 1, **caractérisée en ce que** le train de roues est une paire de bogies (13, 14) constituée par au moins quatre roues (12a-d).

4. Remorque de transport pour le levage et le déplacement, selon l'une ou l'autre des revendications 1 et 3, **caractérisée en ce que** les structures de bogies (13 et 14) de la paire de bogies (13,14) sont supportées sur les tronçons inférieurs de poutres verticales (8a, 8b) du cadre terminal avant (8) avec des structures de rails en diagonale (15), de telle manière que la roue la plus en avant (12b, 12d) de la paire de bogies (13, 14) est derrière le bord frontal de la remorque de transport (1), ou au plus haut au niveau de celui-ci.

5. Remorque de transport pour le levage et le déplacement, selon la revendication 1, **caractérisée en ce que** les éléments de saisie (6) sont agencés afin de se déplacer dans la direction verticale par rapport au châssis (5) de la remorque de transport (1), et **en ce que** le cadre de connexion (10) du châssis (5) de la remorque de transport (1) est à une hauteur constante pendant le fonctionnement de la remorque de transport (1).

6. Remorque de transport pour le levage et le déplacement, selon l'une ou l'autre des revendications 1 et 5, **caractérisée en ce que** les éléments de saisie (6) sont placés en connexion avec les poutres transversales (25, 26) localisées en connexion avec les formes en U des cadres terminaux (8, 9), et **en ce qu'**il est prévu des moyens (7a, 7b) localisés en connexion avec les cadres terminaux pour transférer les poutres transversales et avec elles les éléments de saisie (6), en direction verticale.

7. Remorque de transport pour le levage et le déplacement, selon la revendication 1, **caractérisée en ce que** le cadre terminal avant (8) de préférence est couplé avec une articulation (23) au cadre de connexion (10) pour basculer autour d'un axe vertical par rapport au cadre de connexion (10) au moyen d'un actionneur (24) qui agit entre le cadre de connexion (10) et le cadre terminal avant (8).

8. Remorque de transport pour le levage et le déplacement, selon la revendication 1, **caractérisée en ce que** le cadre terminal arrière (9) est conçu de façon à comprendre une poutre arrière verticale (18) faisant office de partie de connexion de la machine motrice (3) et des poutres antérieures (19) du cadre terminal arrière localisées à une distance depuis la poutre arrière, ayant principalement la forme d'un U dirigé vers le bas, et les éléments de saisie (6) étant connectés à celles-ci, dans laquelle des poutres de connexion (20, 21) qui connectent les parties (18, 19) sont prévues entre elles, et **en ce que** le cadre terminal arrière (9) est agencé de telle manière que dans la condition de fonctionnement de la remorque de transport (1) il est localisé au-dessus du point de support (17) entre la partie inférieure de la poutre arrière (18) de la remorque de transport (1) et la machine motrice (3).

9. Remorque de transport pour le levage et le déplacement, selon la revendication 1, **caractérisée en ce que** les poutres transversales (25, 26) des éléments de saisie (6) sont agencées de manière à recevoir une commande de mouvement dirigée verticalement depuis les poutres verticales (8a, 8b ; 19a, 19b) des cadres terminaux (8, 9).

10. Remorque de transport pour le levage et le déplacement, selon la revendication 1, **caractérisée en ce que**, en connexion avec les poutres transversales (25, 26) des éléments de saisie (6), est établi un agencement de verrouillage (41) au moyen duquel il est possible de verrouiller les poutres transversales (25, 26) immobile en direction verticale en connexion avec les cadres terminaux (8, 9).

11. Remorque de transport pour le levage et le déplacement, selon la revendication 1, **caractérisée en ce que** la position en hauteur du cadre de connexion (10) est choisie de telle manière que ledit au moins container (4) peut être soulevé jusqu'à la position en hauteur à laquelle le niveau de son bord inférieur (4a) est sensiblement au moins au niveau des points de portée des roues (12a-d) du train de roues (11).
